# EUROPEAN PATENT APPLICATION

(11) **EP 4 778 704 A1**
(43) Date of publication of application: **22.07.2026**
(21) Application number: 25867213.8
(22) Date of filing: 27.10.2025
(51) Int. Cl.: B29C 65/00, B29C 53/04, H04N 7/18, B29D 99/00, H01M 50/105, H01M 50/184, B29C 37/00, B29L 31/00

(54) **FOLDING DEVICE AND FOLDING METHOD**

(30) Priority: 28.11.2024 KR 20240173408
(71) Applicant: LG Energy Solution, Ltd., Seoul 07335 (KR)
(72) Inventor: MOON, Hyun Woo, Daejeon 34122 (KR); KIM, Hong Gyun, Seoul 05854 (KR)
(74) Representative: Goddar, Heinz J.
(86) International application number: PCT/KR2025/017151
(87) International publication number: WO 2026/116790

(57) **Abstract**

The technical spirit of the present disclosure provides a folding device including: a position detector that detects a position of a battery cell and determines a position correction value based on the detected position of the battery cell and a reference position; a folding part configured to fold an edge part of the battery cell; and a moving stage configured to move the folding part based on the position correction value provided by the position detector.

## Description

### [Technical Field]

The present disclosure relates to a folding device and a folding method.

This application claims the benefit of Korean Patent Application No. 10-2024-0173408, filed on November 28, 2024, the disclosure of which is incorporated herein by reference.

### [Background]

Secondary batteries have high energy density, long lifespan, and low self-discharge rates, and are widely utilized as core components in portable electronic devices, energy storage systems, and electric vehicles. Secondary batteries are largely used in three types: prismatic batteries, pouch-type batteries, and cylindrical batteries. The pouch-type battery includes an electrode assembly in which a plurality of electrodes are stacked, and a pouch case accommodating the electrode assembly. In the pouch-type battery, the peripheral part of the pouch case has a sealing part that seals the internal space of the pouch case in which the electrode assembly is accommodated. In order to miniaturize battery cells and strengthen the sealing force of the sealing part of the pouch case, a folding operation for folding the sealing part of the pouch case is performed.

### [Summary]

### [Technical Problem]

The technical problem to be solved by the technical spirit of the present disclosure is to provide a folding device configured to fold an edge part of a battery cell.

The technical problem to be solved by the technical spirit of the present disclosure is to provide a folding method for folding an edge part of a battery cell.

### [Technical Solution]

To solve the aforementioned problems, the technical concept of the present disclosure provides a folding device including: a position detector that detects a position of a battery cell and determines a position correction value based on the detected position of the battery cell and a reference position; a folding part configured to fold an edge part of the battery cell; and a moving stage configured to move the folding part based on the position correction value provided by the position detector.

In exemplary embodiments, the moving stage is configured to adjust a position of the folding part in an X-axis direction, a position in a Y-axis direction, and an angular position in a rotation direction having a Z-axis direction as a rotation axis based on the position correction value.

In exemplary embodiments, the position detector includes a vision camera that photographs the battery cell, and a processor configured to calculate the position correction value based on an image of the battery cell obtained from the vision camera.

In exemplary embodiments, the battery cell has a chamfered corner part between a first edge and a second edge, and the position detector is configured to detect an intersection point where a first extension line of the first edge of the battery cell and a second extension line of the second edge of the battery cell meet, and to determine the position correction value based on a difference between the intersection point and a reference point.

In exemplary embodiments, the battery cell has a first chamfered corner part between a first edge and a second edge and a second chamfered corner part between the second edge and a third edge, and the position detector is configured to detect a first intersection point where a first extension line of the first edge of the battery cell and a second extension line of the second edge of the battery cell meet, and a second intersection point where the second extension line of the second edge of the battery cell and a third extension line of the third edge of the battery cell meet, and to determine the position correction value based on the first intersection point, the second intersection point, a first reference point, and a second reference point.

In exemplary embodiments, the position correction value includes a displacement in an X-axis direction between the first intersection point and the first reference point, a displacement in a Y-axis direction between the first intersection point and the first reference point, and an angular displacement between a straight line passing through the first intersection point and the second intersection point and a straight line passing through the first reference point and the second reference point.

In exemplary embodiments, the folding part is configured to sequentially perform first folding that folds the edge part of the battery cell by 90 degrees and second folding that folds the edge part of the battery cell folded by 90 degrees to 180 degrees.

In exemplary embodiments, the folding part is configured to further perform third folding that folds the edge part of the battery cell folded by 180 degrees to 270 degrees.

In exemplary embodiments, the folding part includes: a lower die; an upper die; a folding die that folds the edge part of the battery cell while the edge part of the battery cell is supported by the lower die and the upper die; and a frame that supports the lower die, the upper die, and the folding die and is coupled to the moving stage.

To solve the aforementioned problems, the technical concept of the present disclosure provides a folding method including: detecting a position of a battery cell and determining a position correction value based on the detected position of the battery cell and a reference position; adjusting a position of a folding part configured to fold an edge part of the battery cell based on the position correction value; and folding the edge part of the battery cell with the folding part.

In exemplary embodiments, adjusting the position of the folding part includes adjusting a position of the folding part in an X-axis direction, a position in the Y-axis direction, and an angular position in a rotation direction having a Z-axis direction as a rotation axis based on the position correction value.

In exemplary embodiments, determining the position correction value includes: photographing the battery cell with a vision camera; and calculating the position correction value based on an image of the battery cell obtained from the vision camera.

In exemplary embodiments, the battery cell has a chamfered corner part between a first edge and a second edge, and detects an intersection point where a first extension line of the first edge of the battery cell and a second extension line of the second edge of the battery cell meet, and determines the position correction value based on a difference between the intersection point and a reference point.

In exemplary embodiments, the battery cell has a first chamfered corner part between a first edge and a second edge and a second chamfered corner part between the second edge and a third edge, and detects a first intersection point where a first extension line of the first edge of the battery cell and a second extension line of the second edge of the battery cell meet, and a second intersection point where the second extension line of the second edge of the battery cell and a third extension line of the third edge of the battery cell meet, and determines the position correction value based on the first intersection point, the second intersection point, a first reference point, and a second reference point.

In exemplary embodiments, folding the edge part of the battery cell includes: folding the edge part of the battery cell by 90 degrees; folding the edge part of the battery cell folded by 90 degrees to 180 degrees; and folding the edge part of the battery cell folded by 180 degrees to 270 degrees.

### [Advantageous Effects]

According to exemplary embodiments, a position correction value for correcting a position misalignment of a battery cell can be determined based on a position of the battery cell detected using a vision camera, and a position of a folding part that performs a folding operation on an edge part of the battery cell can be aligned with the position of the battery cell based on the determined position correction value. Accordingly, reliability of the folding operation on the edge part of the battery cell can be improved.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a configuration diagram showing a folding device according to exemplary embodiments.
FIG. 2 is a plan view showing a battery cell loaded into the folding device.
FIG. 3 is a diagram for explaining a process of determining a position correction value in the position detector of the folding device according to exemplary embodiments.
FIG. 4 is a perspective view showing a folding part and a moving stage according to exemplary embodiments.
FIG. 5 is an exploded view showing a lower die, an upper die, and a folding die of the folding part according to exemplary embodiments.
FIG. 6 is a perspective view showing the upper die, lower die, and folding die of the folding part according to exemplary embodiments.
FIGS. 7 to 13 are diagrams showing a folding method according to exemplary embodiments.
FIG. 14 is a flowchart showing a folding method according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First Embodiment)

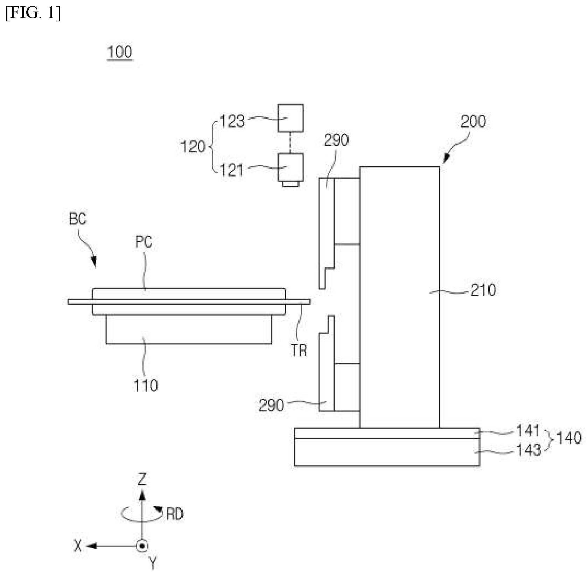

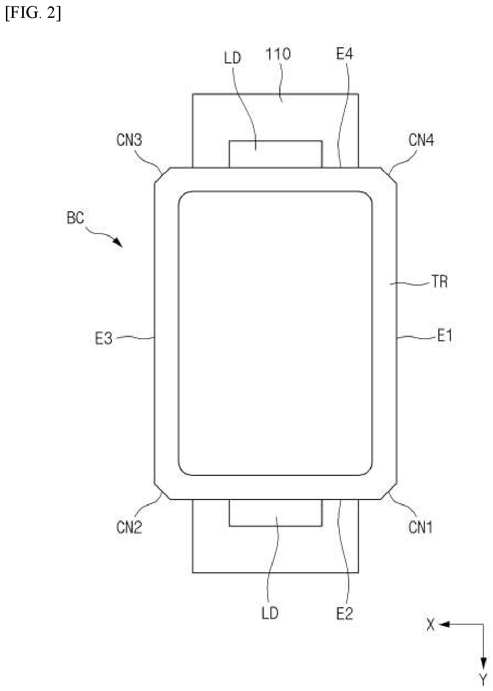

FIG. 1 is a configuration diagram showing a folding device 100 according to exemplary embodiments. FIG. 2 is a plan view showing a battery cell BC loaded into the folding device 100.

Referring to FIGS. 1 and 2, the folding device 100 may perform a folding process for folding an edge part TR of a battery cell BC.

The battery cell BC may constitute a secondary battery and may include an electrode assembly, an electrolyte solution, and a pouch case PC. The electrode assembly accommodated in the pouch case PC may include a positive electrode, a negative electrode, and a separator interposed between the positive electrode and the negative electrode. The electrode assembly may be any one of a jelly-roll type and a stack-type depending on the assembly form. The jelly-roll type electrode assembly may include a winding structure of a positive electrode, a negative electrode, and a separator interposed therebetween. The stack-type electrode assembly may include a plurality of positive electrodes, a plurality of negative electrodes, and a plurality of separators interposed therebetween that are sequentially stacked. The positive electrode may include a positive electrode current collector and a positive electrode active material. The negative electrode may include a negative electrode current collector and a negative electrode active material. The battery cell BC may have an electrode lead LD that protrudes from at least one of both ends of the pouch case PC and is connected to the electrode assembly.

The pouch case PC may be manufactured from a laminate sheet. The laminate sheet may have a multilayer structure including a resin layer. The pouch case PC may provide an accommodation space in which the electrode assembly is accommodated. The pouch case PC may include a sealing part for sealing the accommodation space in which the electrode assembly is accommodated. The sealing part of the pouch case PC may be provided on an edge part TR of the pouch case PC. The sealing part of the pouch case PC may be formed by heat-sealing two portions of the laminate sheet. In the present disclosure, the edge part TR of the battery cell BC may refer to the edge part TR of the pouch case PC, and sealing the edge part TR of the battery cell BC may refer to folding the edge part TR of the pouch case PC provided with the sealing part.

The battery cell BC may have four chamfered corner parts CN1, CN2, CN3, and CN4. The corner parts CN1, CN2, CN3, and CN4 of the battery cell BC may have a chamfered form through corner cutting that cuts each of the corner regions of the rectangular-shaped pouch case PC. When viewed in a plan view, the battery cell BC may have a chamfered corner part CN1 between the first edge E1 and the second edge E2, a chamfered corner part CN2 between the second edge E2 and the third edge E3, a chamfered corner part CN3 between the third edge E3 and the fourth edge E4, and a chamfered corner part CN4 between the fourth edge E4 and the first edge E1.

The folding device 100 may include a cell stage 110, a position detector 120, a folding part 200, and a moving stage 140.

The cell stage 110 may support the battery cell BC. The cell stage 110 may be configured to support the battery cell BC and transfer the battery cell BC along a predetermined path.

The position detector 120 may detect a position of the battery cell BC placed on the cell stage 110. The position detector 120 may determine a position correction value based on the detected position of the battery cell BC and a predetermined reference position.

The position detector 120 may include a vision camera 121 and a processor 123. The vision camera 121 may be disposed above the cell stage 110. The vision camera 121 may photograph or image the battery cell BC placed on the cell stage 110, and may generate an image of the battery cell BC. The processor 123 may process the image of the battery cell BC generated by the vision camera 121 to detect a position of the battery cell BC placed on the cell stage 110, and may calculate a position correction value based on the detected position of the battery cell BC and a predetermined reference position. The reference position may be a position set during initial setup of the vision camera 121. Alternatively, the reference position may be a position corresponding to a mark provided on a fixture (e.g., cell stage 110) within the field of view of the vision camera 121, or may be a position determined based on a position corresponding to the mark.

The vision camera 121 may include a camera and/or an image sensor. The processor 123 may be instantiated by hardware, firmware, software, and combinations thereof. For example, the processor 123 may include a computing device such as a workstation computer, desktop computer, laptop computer, or tablet computer. The processor 123 may include any one of a simple controller, a complex processor such as a microprocessor, CPU, GPU, etc., a processor configured by software, and dedicated hardware and firmware. The processor 123 may be instantiated by, for example, a general-purpose computer or application-specific hardware such as a Digital Signal Processor (DSP), Field Programmable Gate Array (FPGA), and Application Specific Integrated Circuit (ASIC). The position correction value generated by the position detector 120 may include a displacement in the X-axis direction, a displacement in the Y-axis direction, and an angular displacement in a rotation direction RD having the Z-axis direction as a rotation axis.

The folding part 200 may be disposed on one side of the cell stage 110, and may fold the edge part TR of the battery cell BC placed on the cell stage 110. The folding part 200 may include at least one die 290 for supporting and pressing the edge part TR of the battery cell BC, an actuator for moving the at least one die 290, and a frame 210 on which the at least one die 290 and the actuator are mounted. The folding part 200 may fold the edge part TR of the battery cell BC by operating the at least one die 290 according to a predetermined folding sequence.

In exemplary embodiments, the folding part 200 may be configured to sequentially perform a first folding operation that folds the edge part TR of the battery cell BC by 90 degrees, a second folding operation that folds the edge part TR of the battery cell BC folded by 90 degrees to 180 degrees, and a third folding operation that folds the edge part TR of the battery cell BC folded by 180 degrees to 270 degrees. In some exemplary embodiments, the folding part 200 may be a single device that performs the first folding operation, the second folding operation, and the third folding operation according to a predetermined folding sequence. In some exemplary embodiments, the folding part 200 may include a folding module configured to perform the first folding operation, a folding module configured to perform the second folding operation, and a folding module configured to perform the third folding operation, and the folding modules may be sequentially disposed along a transfer path of the battery cell BC provided by the cell stage 110.

The moving stage 140 may move the folding part 200. The moving stage 140 may linearly move the folding part 200 in the X-axis direction and the Y-axis direction, and may rotate it with respect to the Z-axis direction. The moving stage 140 may adjust a position of the folding part 200 in the X-axis direction, a position in the Y-axis direction, and an angular position in a rotation direction RD having the Z-axis direction as a rotation axis.

The moving stage 140 may include a connection plate 141 fixedly coupled to the frame 210 of the folding part 200, and a main body part 143 on which a plurality of actuators are mounted. The connection plate 141 may move integrally with the frame 210 of the folding part 200. The plurality of actuators mounted on the main body part 143 may move the connection plate 141 and the frame 210 of the folding part 200. Each of the plurality of actuators mounted on the main body part 143 may include a motor, a hydraulic cylinder, a pneumatic cylinder, or a combination thereof. The plurality of actuators mounted on the main body part 143 may include an actuator responsible for linear movement in the X-axis direction of the folding part 200, an actuator responsible for linear movement in the Y-axis direction of the folding part 200, and an actuator responsible for rotation having the Z-axis direction as a rotation axis of the folding part 200.

The moving stage 140 may be configured to move the folding part 200 based on the position correction value provided by the position detector 120. The moving stage 140 may move the folding part 200 based on the position correction value provided by the position detector 120 to adjust a position in the X-axis direction, a position in the Y-axis direction, and an angular position in a rotation direction RD having the Z-axis direction as a rotation axis of the folding part 200. The moving stage 140 may move the folding part 200 based on the position correction value provided by the position detector 120 to align the folding part 200 at a working position for performing a folding operation on the edge part TR of the battery cell BC.

According to exemplary embodiments, a position correction value for correcting a position misalignment of the battery cell BC can be determined based on a position of the battery cell BC detected using the vision camera 121, and a position of the folding part 200 that performs a folding operation on the edge part TR of the battery cell BC can be aligned with the position of the battery cell BC based on the determined position correction value. Accordingly, reliability of the folding operation on the edge part TR of the battery cell BC can be improved.

### (Second Embodiment)

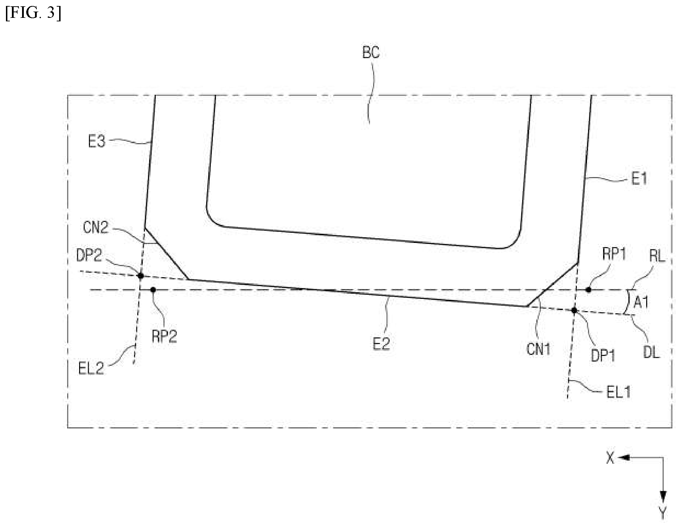

FIG. 3 is a diagram for explaining a process of determining a position correction value in the position detector 120 of the folding device 100 according to exemplary embodiments.

Referring to FIGS. 1 to 3, the position detector 120 may process an image of the battery cell BC generated by the vision camera 121 to detect a virtual intersection point where extension lines of two edges of the battery cell BC meet, and may calculate a position correction value based on a difference between the virtual intersection point and a predetermined reference point. For example, the reference point may be a position set during initial setup of the vision camera 121.

The position correction value may include a displacement in the X-axis direction, a displacement in the Y-axis direction, and an angular displacement in a rotation direction RD having the Z-axis direction as a rotation axis.

In exemplary embodiments, the position detector 120 may detect a first intersection point DP1 where an extension line EL1 of the first edge E1 of the battery cell BC and an extension line EL2 of the second edge E2 meet, and may detect a second intersection point DP2 where the extension line EL2 of the second edge E2 of the battery cell BC and an extension line of the third edge E3 meet. The position detector 120 may determine a displacement in the X-axis direction, a displacement in the Y-axis direction, and an angular displacement in a rotation direction RD having the Z-axis direction as a rotation axis for aligning the position of the folding part 200 with the position of the battery cell BC based on the first intersection point DP1, the second intersection point DP2, a first reference point RP1, and a second reference point RP2. For example, the first reference point RP1 and the second reference point RP2 may be positions set during initial setup of the vision camera 121. The displacement in the X-axis direction for aligning the position of the folding part 200 with the position of the battery cell BC may be determined as a difference value between the X-axis coordinate of the first intersection point DP1 and the X-axis coordinate of the first reference point RP1. Alternatively, the displacement in the X-axis direction for aligning the position of the folding part 200 with the position of the battery cell BC may be determined as a difference value between the X-axis coordinate of the second intersection point DP2 and the X-axis coordinate of the second reference point RP2. The displacement in the Y-axis direction for aligning the position of the folding part 200 with the position of the battery cell BC may be determined as a difference value between the Y-axis coordinate of the first intersection point DP1 and the Y-axis coordinate of the first reference point RP1. Alternatively, the displacement in the Y-axis direction for aligning the position of the folding part 200 with the position of the battery cell BC may be determined as a difference value between the Y-axis coordinate of the second intersection point DP2 and the Y-axis coordinate of the second reference point RP2. The angular displacement for aligning the position of the folding part 200 with the position of the battery cell BC may be determined as an included angle A1 between a straight line RL passing through the first reference point RP1 and the second reference point RP2 and a straight line DL passing through the first intersection point DP1 and the second intersection point DP2.

### (Third Embodiment)

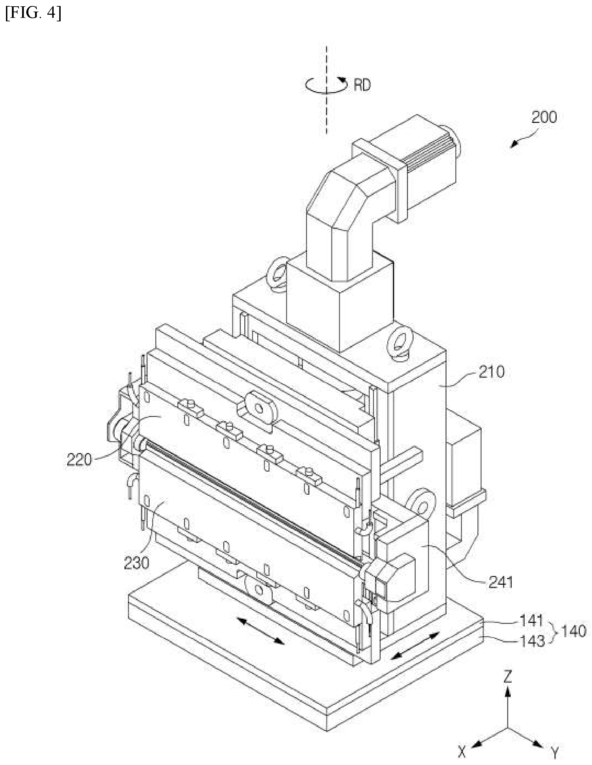

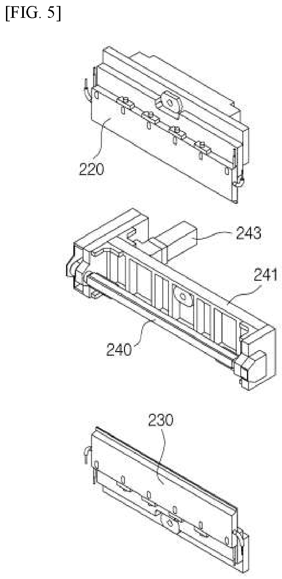

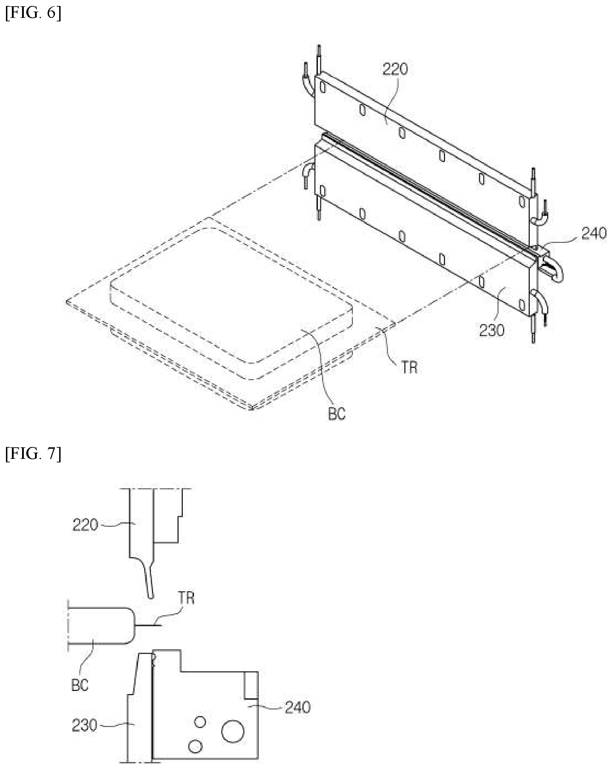

FIG. 4 is a perspective view showing a folding part 200 and a moving stage 140 according to exemplary embodiments. FIG. 5 is an exploded view showing an upper die 220, a lower die 230, and a folding die 240 of the folding part 200 according to exemplary embodiments. FIG. 6 is a perspective view showing the upper die 220, lower die 230, and folding die 240 of the folding part 200 according to exemplary embodiments.

Referring to FIGS. 4 to 6, the folding part 200 may include a frame 210, an upper die 220, a lower die 230, and a folding die 240.

The frame 210 may support the upper die 220, the lower die 230, and the folding die 240. The frame may be fixedly coupled to the connection plate 141 of the moving stage 140, and may move together when the connection plate 141 moves.

The upper die 220 may be installed on a front surface of the frame 210 so as to be able to approach the edge part TR of the battery cell BC. The upper die 220 may extend in one horizontal direction (e.g., Y-axis direction) along the edge part TR of the battery cell BC. The upper die 220 may be installed on the frame 210 so as to be able to move up and down in the Z-axis direction. The upper die 220 may be moved in the Z-axis direction by an actuator.

The lower die 230 may be installed on the front surface of the frame 210 so as to be able to approach the edge part TR of the battery cell BC. The lower die 230 may extend in one horizontal direction (e.g., Y-axis direction) along the edge part TR of the battery cell BC. The lower die 230 may be installed on the frame 210 so as to be able to move up and down in the Z-axis direction. The lower die 230 may be moved in the Z-axis direction by an actuator. The lower die 230 may be disposed below the upper die 220 and may face each other in the Z-axis direction. The lower die 230 and the upper die 220 may form a gap into which the edge part TR of the battery cell BC is inserted.

The folding die 240 may be mounted on the frame 210 so as not to overlap with the upper die 220 and the lower die 230 in the Z-axis direction. The folding die 240 may be disposed behind the upper die 220 and the lower die 230. The folding die 240 may be installed on the frame 210 so as to be able to move up and down in the Z-axis direction. The folding die 240 may be moved in the Z-axis direction by an actuator. The folding die 240 may be configured to rotate with respect to the Y-axis direction. For example, the folding die 240 may be mounted on the frame 210 through a bracket 241, and the folding die 240 may be mounted on the bracket 241 so as to be rotatable with respect to the Y-axis direction. The rotation of the folding die 240 may be controlled and realized by an actuator 243. The bracket 241 may be mounted on the frame 210 so as to be movable in the Z-axis direction. The bracket 241 and the folding die 240 may move together in the Z-axis direction. The folding die 240 may press the edge part TR of the battery cell BC while moving in the Z-axis direction and rotating with respect to the Y-axis direction.

The folding part 200 may fold the edge part TR of the battery cell BC by operating the upper die 220, the lower die 230, and the folding die 240 according to a predetermined folding sequence. In exemplary embodiments, the folding part 200 may be configured to sequentially perform a first folding operation that folds the edge part TR of the battery cell BC by 90 degrees, a second folding operation that folds the edge part TR of the battery cell BC folded by 90 degrees to 180 degrees, and a third folding operation that folds the edge part TR of the battery cell BC folded by 180 degrees to 270 degrees.

### (Fourth Embodiment)

FIGS. 7 to 13 are diagrams showing a folding method according to exemplary embodiments. Hereinafter, a folding method according to exemplary embodiments will be described with reference to FIGS. 7 to 13 together with FIGS. 4 to 6.

Referring to FIG. 7, the moving stage 140 moves the folding part 200 to position the edge part TR of the battery cell BC between the upper die 220 and the lower die 230.

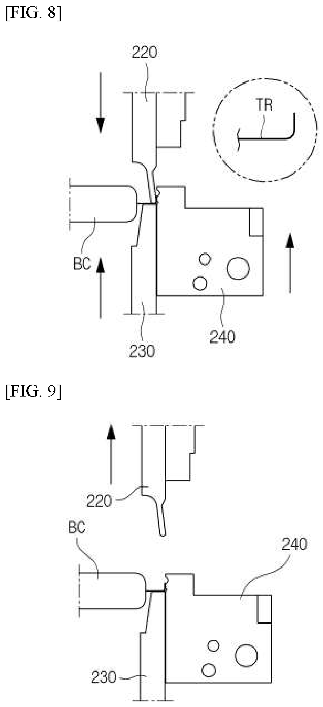

Referring to FIG. 8, a first folding operation is performed to fold the edge part TR of the battery cell BC by 90 degrees.

To perform the first folding operation, the edge part TR of the battery cell BC is fixed between the upper die 220 and the lower die 230. To fix the edge part TR of the battery cell BC, the upper die 220 descends from its initial position to contact an upper surface of the edge part TR of the battery cell BC, and the lower die 230 rises from its initial position to contact a lower surface of the edge part TR of the battery cell BC.

When the edge part TR of the battery cell BC is fixed between the upper die 220 and the lower die 230, the folding die 240 moves upward from its initial position to press and deform a portion of the edge part TR of the battery cell BC fixed between the upper die 220 and the lower die 230. When the upward movement of the folding die 240 is completed, the portion of the edge part TR of the battery cell BC between the folding die 240 and the upper die 220 may be folded at approximately 90 degrees with respect to the portion of the edge part TR of the battery cell BC between the upper die 220 and the lower die 230. The edge part TR of the battery cell BC pressed by the folding die 240 may be plastically deformed and folded by 90 degrees.

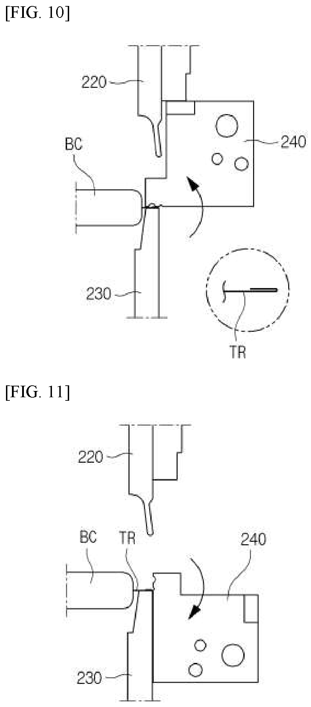

Referring to FIGS. 9 and 10, a second folding operation is performed to fold the edge part TR of the battery cell BC folded by 90 degrees to 180 degrees.

As shown in FIG. 9, to perform the second folding operation, the upper die 220 is raised to move the upper die 220 to an initial position. As the upper die 220 rises, a space in which the folding die 240 can be positioned above the edge part TR of the battery cell BC can be secured.

Thereafter, as shown in FIG. 10, the folding die 240 may rotate approximately 90 degrees with respect to the Y-axis direction until a portion of the folding die 240 contacts an upper surface of the lower die 230. As a result of the folding die 240 rotating and pressing the edge part TR of the battery cell BC, the edge part TR of the battery cell BC folded by 90 degrees may be folded 90 degrees more to be folded by a total of 180 degrees.

Referring to FIGS. 11 to 13, a third folding operation is performed to fold the edge part TR of the battery cell BC folded by 180 degrees to 270 degrees.

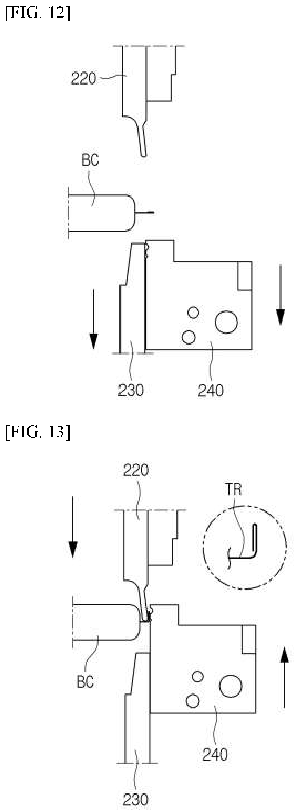

As shown in FIGS. 11 and 12, to perform the third folding operation, the folding die 240 and the lower die 230 are moved to initial positions. The lower die 230 may descend a certain distance to return to an initial position. The folding die 240 may rotate 90 degrees with respect to the Y-axis direction and descend a certain distance to return to an initial position. When the folding die 240 returns to the initial position, the rotation direction of the folding die 240 may be opposite to the rotation direction of the folding die 240 during the second folding operation.

Referring to FIG. 13, the length of the edge part TR of the battery cell BC that has gone through the first folding operation and the second folding operation is reduced compared to before the first folding operation was started. The moving stage 140 advances the folding part 200 by the length of the edge part TR of the battery cell BC that was reduced during the first folding operation and the second folding operation. Next, the upper die 220 descends to support the edge part TR of the battery cell BC, and while the upper die 220 is supporting the edge part TR of the battery cell BC, the folding die 240 moves upward from its initial position to press and deform the edge part TR of the battery cell BC. The portion of the edge part TR of the battery cell BC between the folding die 240 and the upper die 220 may be folded at approximately 90 degrees with respect to the portion of the edge part TR of the battery cell BC below the upper die 220. As a result of the folding die 240 pressing the edge part TR of the battery cell BC, the edge part TR of the battery cell BC folded by 180 degrees may be folded 90 degrees more to be folded by a total of 270 degrees. After the third folding operation is completed, the upper die 220, the lower die 230, and the folding die 240 may return to initial positions.

### (Fifth Embodiment)

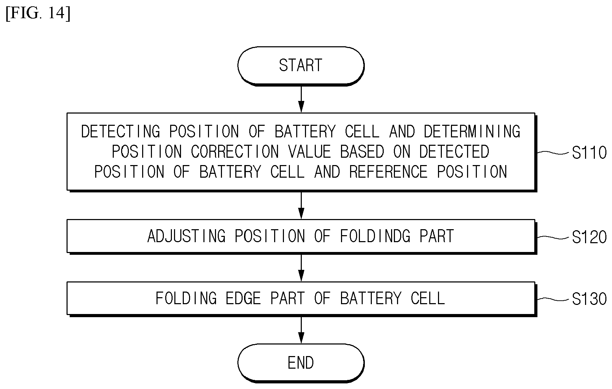

FIG. 14 is a flowchart showing a folding method according to exemplary embodiments. Hereinafter, a folding method according to exemplary embodiments will be described with reference to FIGS. 1 to 14.

First, a position of a battery cell BC is detected, and a position correction value is determined based on the detected position of the battery cell BC and a reference position (S110).

Step S110 may include photographing the battery cell BC placed on the cell stage 110 with the vision camera 121, processing an image of the battery cell BC generated by the vision camera 121 to detect a position of the battery cell BC, and determining a position correction value based on the detected position of the battery cell BC and a predetermined reference position. The position correction value may include a displacement in the X-axis direction, a displacement in the Y-axis direction, and an angular displacement in a rotation direction RD having the Z-axis direction as a rotation axis for correcting a position misalignment of the battery cell BC with respect to the reference position.

Next, a position of the folding part 200 is adjusted based on the position correction value (S120). Step S120 may include adjusting a position in the X-axis direction, a position in the Y-axis direction, and an angular position in a rotation direction RD having the Z-axis direction as a rotation axis of the folding part 200. As the position of the folding part 200 is corrected based on the position correction value, the folding part 200 may be aligned at a working position suitable for performing a folding operation.

Next, the folding part 200 is operated to fold the edge part TR of the battery cell BC (S130). For example, a first folding step of folding the edge part TR of the battery cell BC by 90 degrees, a second folding step of folding the edge part TR of the battery cell BC folded by 90 degrees to 180 degrees, and a third folding step of folding the edge part TR of the battery cell BC folded by 180 degrees to 270 degrees may be sequentially performed.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

### [Description of Reference Numerals]

100: FOLDING DEVICE
110: CELL STAGE
120: POSITION DETECTOR
121: VISION CAMERA
123: PROCESSOR
140: MOVING STAGE
141: CONNECTION PLATE
143: MAIN BODY PART
200: FOLDING PART
210: FRAME
220: UPPER DIE
230: LOWER DIE
240: FOLDING DIE
BC: BATTERY CELL
TR: EDGE PART

## Claims

1. A folding device comprising:
a position detector that detects a position of a battery cell and determines a position correction value based on the detected position of the battery cell and a reference position;
a folding part configured to fold an edge part of the battery cell; and
a moving stage configured to move the folding part based on the position correction value provided by the position detector.

2. The folding device of claim 1, wherein
the moving stage is configured to adjust a position of the folding part in an X-axis direction, a position in a Y-axis direction, and an angular position in a rotation direction having a Z-axis direction as a rotation axis based on the position correction value.

3. The folding device of claim 1, wherein
the position detector comprises a vision camera that photographs the battery cell, and a processor configured to calculate the position correction value based on an image of the battery cell obtained from the vision camera.

4. The folding device of claim 1, wherein
the battery cell has a chamfered corner part between a first edge and a second edge, and
the position detector is configured to detect an intersection point where a first extension line of the first edge of the battery cell and a second extension line of the second edge of the battery cell meet, and to determine the position correction value based on a difference between the intersection point and a reference point.

5. The folding device of claim 1, wherein
the battery cell has a first chamfered corner part between a first edge and a second edge and a second chamfered corner part between the second edge and a third edge, and
the position detector is configured to detect a first intersection point where a first extension line of the first edge of the battery cell and a second extension line of the second edge of the battery cell meet, and a second intersection point where the second extension line of the second edge of the battery cell and a third extension line of the third edge of the battery cell meet, and to determine the position correction value based on the first intersection point, the second intersection point, a first reference point, and a second reference point.

6. The folding device of claim 5, wherein
the position correction value comprises a displacement in an X-axis direction between the first intersection point and the first reference point, a displacement in a Y-axis direction between the first intersection point and the first reference point, and an angular displacement between a straight line passing through the first intersection point and the second intersection point and a straight line passing through the first reference point and the second reference point.

7. The folding device of claim 1, wherein
the folding part is configured to sequentially perform first folding that folds the edge part of the battery cell by 90 degrees and second folding that folds the edge part of the battery cell folded by 90 degrees to 180 degrees.

8. The folding device of claim 7, wherein
the folding part is configured to further perform third folding that folds the edge part of the battery cell folded by 180 degrees to 270 degrees.

9. The folding device of claim 1, wherein
the folding part comprises:
a lower die;
an upper die;
a folding die that folds the edge part of the battery cell while the edge part of the battery cell is supported by the lower die and the upper die; and
a frame that supports the lower die, the upper die, and the folding die and is coupled to the moving stage.

10. A folding method comprising:
detecting a position of a battery cell and determining a position correction value based on the detected position of the battery cell and a reference position;
adjusting a position of a folding part configured to fold an edge part of the battery cell based on the position correction value; and
folding the edge part of the battery cell with the folding part.

11. The folding method of claim 10, wherein
adjusting the position of the folding part comprises adjusting a position of the folding part in an X-axis direction, a position in the Y-axis direction, and an angular position in a rotation direction having a Z-axis direction as a rotation axis based on the position correction value.

12. The folding method of claim 10, wherein
determining the position correction value comprises:
photographing the battery cell with a vision camera; and
calculating the position correction value based on an image of the battery cell obtained from the vision camera.

13. The folding method of claim 10, wherein
the battery cell has a chamfered corner part between a first edge and a second edge, and
detects an intersection point where a first extension line of the first edge of the battery cell and a second extension line of the second edge of the battery cell meet, and determines the position correction value based on a difference between the intersection point and a reference point.

14. The folding method of claim 10, wherein
the battery cell has a first chamfered corner part between a first edge and a second edge and a second chamfered corner part between the second edge and a third edge, and
detects a first intersection point where a first extension line of the first edge of the battery cell and a second extension line of the second edge of the battery cell meet, and a second intersection point where the second extension line of the second edge of the battery cell and a third extension line of the third edge of the battery cell meet, and determines the position correction value based on the first intersection point, the second intersection point, a first reference point, and a second reference point.

15. The folding method of claim 10, wherein
folding the edge part of the battery cell comprises:
folding the edge part of the battery cell by 90 degrees;
folding the edge part of the battery cell folded by 90 degrees to 180 degrees; and
folding the edge part of the battery cell folded by 180 degrees to 270 degrees.
